# EUROPEAN PATENT APPLICATION

(11) **EP 1 681 154 A1**
(43) Date of publication of application: **19.07.2006**
(21) Application number: 03758122.0
(22) Date of filing: 14.10.2003
(51) Int. Cl.: B29D 31/00, B29D 7/00, G09F 3/00, B29C 45/02

(54) **NON-SKID DEVICE FOR OBJECTS FOR PERSONAL USE, AND PRODUCTION METHOD THEREOF**

(71) Applicant: Algotop S.L., 28013 Madrid (ES)
(72) Inventor: PEREZ CARBALLO, Alfonso, 28013 Madrid (ES)
(74) Representative: Primo de Rivera y Urquijo, Jose A.
(86) International application number: PCT/ES2003/000524
(87) International publication number: WO 2005/035231

(57) **Abstract**

The non-slip device for personal use items comprises a body (20) of elastomeric material with a first side that can be coupled to a surface (10) of a personal use item (1), and a second side opposite to the first one and provided with non-slip properties; **characterized in that** said body comprises a flattened band (21) formed such that once it is adhered to the surface (10) of the personal use item, it defines on said surface (10) at least one surface section (11) intended for housing an auxiliary element (3), said surface section (11) being at least partially surrounded by the band (21).

The device is very versatile with respect to the auxiliary element that may be associated thereto, which is protected from blows and friction and does not affect the non-slip function.

A manufacturing process for said device is also described.

## Description

The present invention refers to a non-slip device for personal use items comprising a body of elastomeric material with a first side that can be coupled to a surface of a personal use item, and a second side opposite to the first one and provided with non-slip properties.

### Background of the Invention

There are currently different personal items, such as mobile telephones, notebooks and folders, electronic organizers, coasters, photograph frames, remote controls and many others, which the user carries or can carry with him or her and can rest on a table, a piece of furniture, a counter, the dashboard of a car, etc. Particularly in the case of small objects with smooth and rigid surfaces, such as electronic devices, there is a risk that the object may slide and fall from the support surface either because this surface is not horizontal, or because the object receives a small push or blow, or else because the surface is moving.

On the other hand, there is a constant consumer demand for decorative and auxiliary elements which allow each user to customize his or her telephone, organizer or notebook, including adhesives, photographs, lighting or acoustic devices, etc.

In this field, international patent number WO01/87581 discloses a device satisfying the double function of preventing the accidental sliding of a personal item, such as a mobile telephone, and incorporating a decorative, personal and long-lasting element on the device itself. The object of this patent is currently marketed with the name "piunch". Said international application also discloses a manufacturing process for said device.

Although "piunch" is successful on the market, it has certain limitations that are in need of correcting and preventing.

First, the known device is not very versatile even from the point of view of its decorative effect, given that it only allows incorporating an image and no other type of element, which further requires a particular process for forming it on the material of the "piunch" itself; the decorative element is irremovably associated to the device as it is a single use adhesive, such that it is not possible to modify the "piunch" customization without replacing the device as a whole.

Furthermore, it has been found that screen-printing the image on the material of the device is not altogether satisfactory because it has a high cost and is not as resistant to friction as would be desirable, said screen-printing or said decoration partially or completely taking away the non-slip quality of the device, in addition to becoming erased.

### Description of the Invention

The main objective of the present invention is to develop a non-slip device for personal items which satisfies the non-slip function that has been mentioned but which is more versatile, such that different types of decorative elements, or even elements of another type with auxiliary functions, that is, elements contributing a greater value to the product, maintaining its non-slip qualities and the decoration thereof, can be incorporated or associated to it.

According to this objective, the device according to the invention is characterized by the fact that the body comprises a flattened band, said band being formed such that once it is adhered to the surface of the personal use item, it defines on said surface at least one surface section intended for housing an auxiliary element, said surface section being at least partially surrounded by the band. Said device can have a multitude of shapes (geometric shapes, numbers, letters, etc.) as well as a variety of sizes according to the dimensions of the personal use item on which the device is applied.

As a result of these features, virtually any type of auxiliary element of little thickness, such as photographs, electronic chips, light devices, clocks and the like, can be associated to the device without there being large limitations to its manufacturing process; the auxiliary elements are placed in the surface section of the personal item that is surrounded by the band, such that they are incorporated with the non-slip device forming an aesthetic assembly, are protected from blows and friction, and at the same time do not affect the non-slip function of the device.

Furthermore, given that the auxiliary element is not printed on the material of the body, obtaining it is more cost-effective and it is of better quality. This allows reducing delivery times as the components are manufactured in parallel processes.

In one embodiment the strip has a substantially uniform width, said band being able to be closed or not closed.

According to one embodiment the band forms a closed figure, completely surrounding the surface section of the personal use item; better protection is thus achieved.

Said second side of the body preferably has a plurality of projections forming one piece with the body.

The projections improve the non-slip function and provide the surface of the device with a pleasant touch.

The device advantageously comprises means of coupling said first side of the body to the surface of the personal use item.

Said means of coupling preferably comprise a strip which, at least on one side, is self-adhesive and protected by a removable sheet. Said self-adhesive strip preferably uses a rubber-based adhesive.

Said strip can have a shape that is substantially identical to that of the band; alternatively, said strip may encompass both the band and the surface section of the personal use item that is surrounded by said band.

This second variant allows adhering the auxiliary element on the strip before marketing the device or before coupling it to a personal use item, thus allowing the changing of different auxiliary elements.

Said strip is preferably self-adhesive on both sides.

According to one embodiment, the strip has areas with different adhesive properties.

In one embodiment, the device has at least one associated auxiliary element housed in the surface section of the personal use item which is surrounded by the band, said auxiliary element being chosen from printed decorative or informative images, electronic components, digital displays, advertising objects and lighting, acoustic or measurement elements.

The auxiliary element allows customizing the object on which the device is coupled and can provide the user with additional utilities incorporated on the object itself without losing the non-slip properties of the device as a result.

Said auxiliary element advantageously has a coating; preferably this coating in turn has non-slip and protective properties protecting the auxiliary element.

When the device comprises a strip encompassing both the band and the surface section surrounded by said band, the auxiliary element can be coupled on the strip in said surface section of the personal use item that is surrounded by the band.

An alternative to the foregoing is that the non-slip device is incorporated on the personal use item support surface, forming part of said item in a non-removable manner, such that the personal use item incorporates said non-slip device from the moment of its manufacture.

A second object of the present invention is a manufacturing process for said non-slip device. This process shares most of its steps with the one disclosed and claimed in international patent application WO01/87581.

Said process consists of underwater injection molding without the use of a roller, enabling the formation of the already defined thermoplastic piece with suitable features for use thereof as a non-slip device formed by a flattened band with an internal hollow housing. The known steps of said process are:
- closing the injection machine press with the molds inside,
- introducing in the screw device the thermoplastic material in pellet form through a respective feed hopper with the desired coloring material,
- heating the cylinder of the screw device to cause the melting of the introduced material,
- making the screw device rotate at a high speed with a low counter-pressure in order to introduce the material into the injection machine press until filling the corresponding molds,
- leaving the material introduced in the press to cool as a result of the cooling action of the fluid circulating through the inside of the press,
- opening the press and subsequently the molds inside, and actuating the ejectors in combination with driving means of the bottom of the impression so as to drag the parts by gravity to a corresponding collection hopper, and
- expelling the cold casting pieces.

After obtaining a strip or sheet of non-slip material of large dimensions, specifically dimensions larger than the non-slip device to be obtained, an additional step in the previous process consists of then die-cutting from said strip the non-slip devices with an internal cavity. Said non-slip devices could have any designed shaped.

It is also possible to use hollow molds with different shapes and sizes according to the non-slip device desired and by following the already described manufacturing process.

In addition to the described process, adhesive is applied on the smooth side of the non-slip device.

### Brief Description of the Drawings

In order to better understand the foregoing, several drawings are attached in which the following is represented in a schematic manner and only as an example (a practical embodiment).

In the drawings:
Figure 1 shows a schematic perspective view of a personal use item having coupled thereto a non-slip device according to an embodiment of the invention; and
Figure 2 shows a sectional view along a vertical plane of the device of Figure 1.

### Description of Preferred Embodiments

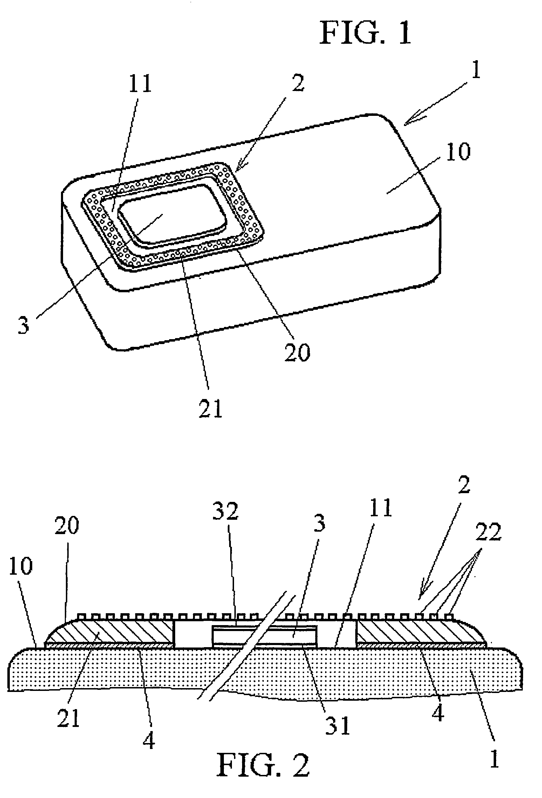

Figure 1 schematically shows a personal use item 1, for example a mobile telephone, on the surface 10 of which a non-slip device 2 according to an embodiment of the present invention has been coupled.

The device 2 comprises a body 20 of thermoplastic elastomeric material, for example a homopolymer with polypropylene and rubber filler, having non-slip properties such that it satisfies the function of preventing the item 1 from sliding when it is being supported; the body 20 has a side intended for being adhered to the item 1 and a non-slip side.

The body 20 can be manufactured by injection molding with a process similar to the one provided in international patent application WO01/87581 mentioned above, or it may be manually injected; large pieces can be molded which are later die-cut, allowing cost savings in shapes and sizes.

The body 20 is made up of a flattened band 21, which in the drawing has a width that is approximately uniform, and is formed such that it defines a closed figure, in this case a rounded-corner rectangle. The band 21 demarcates on the surface 10 of the item 1 a surface section 11 which in this case is completely surrounded by the band 21; this surface section 11 is optionally intended for housing an auxiliary element 3 that can thus be associated to the device 2 and protected by the body 20.

The auxiliary element 3 can be either a decorative or advertising element, for example a photograph or a lighting device, or an object with a practical utility, such as a clock, a thermometer, a magnet or an electronic component of any type: a display, a chip, a solar cell, or any other element of suitable dimensions. It can have a size identical to the cavity or surface section demarcated by the band 21, but it may also be smaller, as shown in the example.

As can be seen in the figure, both the body 20 and the auxiliary element 3 are rather planar: a thickness of the body 20 between 1 and 1.5 mm can be suitable for most applications.

It will be understood that the expanse and shape of the non-slip device 2 may be varied: the band 21 may form a closed body as in Figure 1, but it may also be a flattened band having a series of curves and forming an open body on one side, only partially surrounding the surface section 11 and the auxiliary element 3. It may also adopt a layout such that it demarcates more than one surface section 11, a figure-8, for example, and house more than one auxiliary element 3. The shape and size of the device will largely depend on the personal use item 1 for which it is intended, as well as the auxiliary element 3 that is to be associated thereto.

Should the personal use item 1 have decorative elements (not shown in the figures) on the non-slip device 2 attachment surface, it is possible to not introduce any auxiliary element 3 on surface section 11, such that the decoration existing on the personal use item 1 is visible through the empty surface section 11.

Figure 2 shows the non-slip device 2 in more detail in an enlarged sectional view. It must further be pointed out that some dimensions of the device shown in Figure 2 have been exaggerated with respect to others to aid in understanding the drawing, therefore the device represented is not necessarily its actual size.

As can be seen in Figure 2, the band 21 forming the body 20 has on its upper or visible side a plurality of projections 22 intended for improving the non-slip properties of the device.

To couple the band 21 to the object 1, the device comprises a strip 4 that is self-adhesive at least on the side which must be adhered to the item, protected as is customary by a removable sheet that is not represented in the figure because the device is shown already adhered on the item 1. The strip 4 can be self-adhesive on both sides, being the user who adheres it to both the body 20 and the item, or it can be adhered to the body 20 during the device manufacturing process.

In Figure 2 the strip 4 has the same shape as the band 21, such that the surface section 11 of the item 1 demarcated by the band is left uncovered and the auxiliary element 3 is then coupled by means of its own adhesive means, such as a strip 31.

However, in an embodiment variant the possibility of the strip 4 encompassing both the band 21 and the surface section 11 is provided, such that the auxiliary element is adhered on the strip 4 itself. In this case the strip 4 can be self-adhesive on both sides. The auxiliary element 3 can be adhered to the strip during the manufacturing process, such that the combination of the non-slip device 2 along with the auxiliary element 3 is marketed; or the device 2 can also be marketed already adhered to the strip but with the two accessible sides of said strip protected by respective removable sheets, such that the user is the person who removes the sheet protecting the area of the strip that coincides with the surface section 11 of the item and adheres a given auxiliary element.

It is also possible for the central area of the strip 4 on which the auxiliary element 3 is assembled to not be adhesive, and that the adhesive strip 31 of the element 3 is what is used to adhere it to the strip 4.

Finally, with respect to the adhesive strip 4, it must be pointed out that it can be provided that different areas of the strip have different adhesive properties, for example so that it is easier to remove the entire device 2, including the strip 4, from the item than it is to remove the band 21 from the strip 4; or so that it is easier to release the auxiliary strip 3 than it is the band 21 therefrom.

Sometimes it is necessary for the adhesive to be transparent given that the elements to be introduced must be placed in a specific manner so that said element works properly, it therefore being necessary to see the element through the adhesive.

The auxiliary element 3 may be provided with a coating 32 (Figure 2), for example a polyurethane enamel. This coating protects the element 3 in order to prevent its damage due to possible friction, and it can also give its surface non-slip properties should said auxiliary element come into contact with the support surface.

The coating of the auxiliary element 3 can be carried out by means of a process carried out in an atmosphere of about 25°C and with a moisture of less than 50%, comprising the steps of applying on the element, by means of a nozzle, a mixture of polyurethane and a catalyst; waiting one hour until the mixture reaches the gel state; drying for two hours in an oven between 50 and 60°C; and waiting 24 hours for it to dry or polymerize.

Once the body 20 is molded and provided with the strip 4 and the auxiliary element 3 is manufactured with its coating 32, the two parts can be combined in the different manners described above.

Despite having described specific embodiments of the device according to the invention, a person skilled in the art may introduce variants and modifications, particularly in the shapes, proportions and dimensions of the body 20, according to the requirements of each given application, and may replace the features described with other technically equivalent features without departing from the scope of protection defined by the attached claims.

A feature of the manufacturing process for the non-slip device is, after obtaining a large strip or sheet by means of injection, die-cutting said strip in order to obtain hollow non-slip devices with the shape of the die or dies used.

It must be particularly pointed out that the device according to the invention can be coupled to any item and that the auxiliary element can be any element compatible with the use of the object on which it is applied and not necessarily one of those which has been mentioned as an example.

## Claims

1. A non-slip device for personal use items, comprising a body (20) of elastomeric material with a first side that can be coupled to a surface (10) of a personal use item (1), and a second side opposite to the first one and provided with non-slip properties, **characterized by** the fact that said body comprises a flattened band (21), said band (21) being formed such that once it is adhered to the surface (10) of the personal use item, it defines on said surface (10) at least one surface section (11) intended for optionally housing an auxiliary element (3), said surface section (11) being at least partially surrounded by the band (21).

2. A non-slip device according to claim 1, **characterized by** the fact that said band (21) has a substantially uniform width.

3. A non-slip device according to claims 1 or 2, **characterized by** the fact that said band (21) forms a closed figure, completely surrounding the surface section (11) of the personal use item (1).

4. A non-slip device according to any of the previous claims, **characterized by** the fact that said second side of the body (20) has a plurality of projections (22) forming one piece with the body (20).

5. A non-slip device according to any of the previous claims, **characterized by** the fact that it comprises means (4) of coupling said first side of the body (20) to the surface (10) of the personal use item.

6. A non-slip device according to claim 5, **characterized by** the fact that said means of coupling comprise a strip (4) which is self-adhesive on at least one side and is protected by a removable sheet.

7. A non-slip device according to claim 6, **characterized by** the fact that said strip (4) has a shape that is substantially identical to that of the band (21).

8. A non-slip device according to claim 6, **characterized by** the fact that said strip (4) encompasses both the band (21) and the surface section (11) of the personal use item which is surrounded by said band (21).

9. A non-slip device according to any of claims 6 to 8, **characterized by** the fact that said strip (4) is self-adhesive on both sides.

10. A non-slip device according to claim 9, **characterized by** the fact that said strip (4) has areas with different adhesive properties.

11. A non-slip device according to any of the previous claims, **characterized by** the fact that associated thereto there is at least one auxiliary element (3) which is housed in the surface section (11) of the personal use item which is surrounded by the band (21), said auxiliary element (3) being chosen from printed decorative or informative images, electronic components, advertising objects and lighting, acoustic or measurement elements.

12. A non-slip device according to claim 11, **characterized by** the fact that said auxiliary element (3) has a coating (32).

13. A non-slip device according to claim 12, **characterized by** the fact that the coating (32) for the auxiliary object (3) in turn has non-slip properties.

14. A non-slip device according to claim 8 and any of claims 11 to 13, **characterized by** the fact that the auxiliary element (3) is coupled on the strip (4) in the surface section (11) of the personal use item (1) that is surrounded by the band (21).

15. A non-slip device according to the previous claims, **characterized in that** it is incorporated to the personal use item such that it is part of the support surface of said item in a non-removable manner.

16. A manufacturing process for a non-slip device for personal use items as claimed in the previous claims, of the type by means of underwater injection molding without using a roller, including the following steps:
- closing the injection machine press with the molds inside,
- introducing in the screw device the thermoplastic material in pellet form through a respective feed hopper with the desired coloring material,
- heating the cylinder of the screw device to cause the melting of the introduced material,
- making the screw device rotate at a high speed with a low counter-pressure in order to introduce the material into the injection machine press until filling the corresponding molds,
- leaving the material introduced in the press to cool as a result of the cooling action of the fluid circulating through the inside of the press,
- opening the press and subsequently the molds inside, and actuating the ejectors in combination with driving means of the bottom of the impression so as to drag the parts by gravity to a corresponding collection hopper, and
- expelling the cold casting pieces.
**characterized in that** a single sheet or strip of non-slip material is obtained which is subsequently die-cut in order to obtain the non-slip devices with an internal cavity.

17. A manufacturing process for a non-slip device for personal use items according to claim 16, **characterized in that** the dimensions of the obtained strip or sheet are larger than the dimensions of the non-slip device to be die-cut and obtained.
